# EUROPEAN PATENT SPECIFICATION

(11) **EP 1 647 384 B1**
(45) Date of publication and mention of the grant of the patent: **17.09.2008**
(21) Application number: 04024792.6
(22) Date of filing: 18.10.2004
(51) Int. Cl.: B29C 44/56

(54) **Combined compression and shearing process for the production of a crushed polyolefin foam and product obtained thereby**
Kombiniertes Kompressions- und Scherverfahren für die Produktion eines gequetschten Polyolefinschaumstoffs und dabei erhaltenes Produkt
Procédé de compression et cisaillement combinés pour la production d'une mousse concassée de polyoléfine et produit ainsi obtenu

(43) Date of publication of application: 19.04.2006
(73) Proprietor: Alveo AG, 6002 Luzern (CH)
(72) Inventor: Geraedts, Patrick, 6086 BE Neer (NL); Roegies, Patrick, 6074 GG Melick (NL); Matsumura, Michio, Minami-saitama-gun Saitama (JP)
(74) Representative: Strehl Schübel-Hopf & Partner

(56) References cited:
- EP-A- 0 393 255
- US-A- 4 435 346
- US-A- 5 705 115

## Description

The present invention relates to a process for the production of polyolefin foams having a crushed or open-cell structure according to claim 1, as well as a polyolefin foam according to claim 9.

Foams having open cells (shortterm gas exchange between the cells, also called breathable foams) differ from foams with closed cells (no shortterm gas exchange, non-breathable foams) in a number of properties. In particular, otherwise comparable materials with open cells and closed cells differ from each other mainly in the compression strength and compression set. A low compression strength value of open-cell foams is associated with softer touch or grip of the product. Further, a complete gas exchange is possible between the open cells, and there is a highly increased elasticity and an increased softness due to the decreased compression strength. A low compression set value of open-cell foams means a better recovery of the foam after having been compressed. Such properties are particularly desired, for example in the case of sealing applications, like joint fillers, adhesive coated sealing tapes, die-cutted gaskets, or car interior products, like laminates of embossed film or fabric with open-cell foam in car interiors or comfort and cushion materials in general.

The production of so-called "open-cell" foamed plastics is disclosed in several prior art documents:
According to the Japanese Patent Application H3-169622 (1991), a closed cell polyolefin foam is continuously compressed between two rolls in order to obtain a fraction of open cells in the foam. In order to achieve an even higher amount of open cells the foam may be stretched in the machine direction and in the transverse direction with an elongation of more than 1%.

US 4435346 discloses a process for the production of an open-cell foamed article according to the preamble of claim 9, having high open-cell ratio and a high degree of expansion which is produced by a method comprising preparing a formable and cross-linkable polyolefin composition, foaming the composition and inserting a mechanical deformation to the resulting polyolefin foam to rupture the cell membranes. A mechanical deformation is performed by compression exhibited with two rolls at equal speed. The process requires a particular conduction of the foaming process including the decomposition of a crosslinking agent and a blowing agent in a particular ratio so that cells with easily rupturable membranes are formed.

US 3394214 discloses a cross-linked ethylene polymer foam having been crushed at a roll setting of less than 25% of the initial thickness using for example a two-roll calender.

US 5859076 relates to a process for the production of polyolefin foamed articles having a large degree of open cells in which a foam passes successive nip rollers. There is no disclosure about the speeds of the rollers.

GB 1211981 discloses synthetic foams made of polystyrene sheets which have been obtained by foaming agglomerated polystyrene foam beads and were subsequently made softer and more flexible under pressure and temperature.

US-A-3240855 relates to a method of fluffing thin strips of flexible polyurethane foam to transform the form into a more completely open cell structure. This method comprises an advancing polyurethane foam strip which has a freshly slit surface in contact with a roller moving at a circumferential speed significantly greater than the speed of advancement of the strip. This method makes use of the specific elasticity of polyurethane foam material and of the tendency of the freshly slit surface of the polyurethane foam toward adhering to the surface of a roller compressed against it.

US 5133922 describes a process for the production of panels, webs, panel-like mouldings or profiles from plastics in which plastic plates (polypropylene) are compressed between a pair of rolls using pressure and tension at temperatures above the melting point of the crystalline material or the softening range of the amorphous material and above 303° K. In the compressive roll-stripping two rolls have approximately the same circumferential speed. This document does not relate to a foamed start material and the crushing of cells.

EP 0 393 255 A1 discloses a process for the crushing of foam materials, according to the preamble of claim 1, wherein blocks of foam are compressed in one direction, and wherein a shift is performed in a different direction than the compressing in the compressed condition of the foam or during the compression process.

Polyolefin foams having a certain degree of open cells are described in DE 198 40 203. According to this process soft polyolefin foams are made by passing a web of a polyolefin foam having closed cells through the gap between at least one pair of rolls wherein the rolls rotate with different circumferential speeds thereby simultaneously compressing and shearing the foam web. The polyolefin foam obtained by this process is not described as being open-celled, but rather as a closed cell material having only a low degree of open cells which, however, behaves similar as an open-cell foam and has a largely improved elastic behaviour in the direction of the z-axis (thickness direction) as well as an improved compression set and a softer grip.

However, while performing the teaching of DE 198 40 203 the present inventors found out that depending on the specific compression parameters there are obtained different and not always satisfactory results with respect to the number of open cells and the distribution thereof in the direction of the thickness of the material (z-axis). It could be shown that the teaching of this document can be well applied in a rather narrow expansion degree range (also termed foaming degree or expansion factor), namely at foaming degrees ≥ about 36, corresponding to a density of about ≤ 28 kg/m³. However, outside this range a satisfactory rupturing of cell membranes over the whole z-axis cannot be obtained reproducibly.

Further, it was found that the process according to this prior art document is not well suitable for processing starting materials having large widths of 1 m, 2m or more, particularly if high density starting foams are used, probably because the forces which have to be applied to generate crushed cells are too high when such large widths are used. Thus, a process would be desirable with which polyolefin foam webs or sheets with crushed cells having a large width compared with the prior art can be obtained.

Thus, it is an object of the present invention to provide a method for the production of a polyolefin foam having a substantially ruptured cell structure along the whole z-axis, not only in the center of the foam web. This should preferably also be achieved also in an expansion degree in the range of 35 to 2 (corresponding to densities of 29-500 kg/m³). It is a further object of the present invention to provide a polyolefin foam web or sheet having a larger degree of open cells also when applying starting material foams having a high density and/or a large width. It is also an object of the present invention to provide such a process which is reproducible, in particular with regard to the friction or shearing degree of the foam.

These objects of the present invention are solved by a process according to claim 1 for producing a crushed polyolefin foam comprising passing a web of a polyolefin foam through the gaps formed by each of at least two consecutive pairs of rolls, wherein the rolls of each pair of rolls are rotating in machine direction with a different circumferential speed with respect to the other roll of said pair of rolls so that the foam web is simultaneously subjected to compression and shearing, and
wherein the circumferential speeds of the rolls in at least two subsequent pairs of rolls are adjusted so that the rolls having a higher circumferential speed with respect to the other roll in the pair of rolls are located on different sides of the foam web.

Using this process cell membranes or cell walls can be made to rupture even when lower expansion degrees, higher starting densities and/or larger starting foam web widths are used, whereby an open-cell system is formed which is interconnected in all axial directions of the foam web. Thus, there can be obtained a product having a high compression strength and low compression set, i.e. a good recovery to the initial state prior to the compression.

The present invention also relates to a crushed polyolefin foam according to claim 9.

According to the definition of the present invention the term expansion degree or foaming degree refers to the number of expansion/foaming processes the starting polyolefin foam has been subjected to. The foaming according to the present invention can be performed according to processes known to the skilled person, e.g. using heat.

Although the number of pairs of rolls used in the present invention is at least two, i.e. comprises two or more than pairs of rolls, it is preferred that for the combined compression, shearing or friction process of the present invention exactly two pairs of rolls performing the combined compression and shearing are used. This reduces the apparative effort and the susceptability to apparative faults during the process providing at the same time a very satisfactory product.

The pressure to be exerted on the web or sheet passing the respective pairs of rolls is affected by several parameters like tension, friction, or circumferential tension which can be adjusted by a skilled person according to the requirements of the product foam web and the properties of the starting foam web.

The degree of compression and the degree of rupture is determined to a large degree by the gap opening between the rolls, the circumferential speeds and speed differences between the rolls and also the total speed of the rolls. These parameters can be adjusted by the skilled person so that a desired change of the properties of the foam is achieved, preferably without affecting the foam web optically, i.e. without causing fractures or damages of the outer surfaces. On the other hand the chemical nature of the foamed polymer and additives also have an effect. It is for example known to include cell weakening additives. However, it is an advantage of the present invention that such additives are not required anymore or to a lesser degree and/or that a comparabable degree of open cells can be obtained which could only be obtained using additives in the prior art.

A higher speed, a larger difference between the circumferential speeds of the respective pairs of rolls and a smaller gap distance and a different speed/friction ratio between the rolls generally result in an increased degree of ruptured cells. In this respect the term "friction" or "shearing" used in the present invention corresponds to the circumferential speed difference between the rolls in a pair of rolls. The higher the circumferential speed difference, the larger is the friction or shearing, although this is not necessarily a linear relationship.
The gap clearance between each pair of rolls is preferably 0.05 - 50 mm, more preferably 0.1 - 5 mm. Further, the gap constancy during processing is preferably 0.03 mm (+/- 0.01) and the roll straightness accuracy over the width during application of force is ≤ 0.01 mm.

The total speed of one pair of rolls can be varied in a wide range. It is preferably in the range of 1 to 50 m/min, preferably 5 to 40 m/min. More preferably it is in the range of 10 to 30 m/min or 10 to 20 m/min.

The absolute circumferential speeds of the rolls in the pairs of rolls can also be varied in a wide range. Preferably, they are in the range of 0.5 to 30 m/min, preferably 2.5 to 20 m/min, more preferably 5 to 15 m/min or 5 to 10 m/min.

The ratio of the circumferential speeds of the rolls within a pair of rolls can preferably be in a range of e.g. 1:1.02 to 1:5, more preferably 1:1.05 to 1:2.5, more preferably 1:1.1 to 1:1.4. Using such ratios the friction exerted on the foam web is such that a good degree of open cells is formed, and a foamed article with low compression strength and compression set can be obtained, in which the surfaces of the product are not damaged.

If the circumferential speeds between two rolls in a pair of rolls differs too much there is a tendency that the surface of the foam web may be damaged due to high friction. If the ratio is too low there is a tendency that the degree of open cells formed in the process is not sufficient, in particular when high starting densities, i.e. ≥ 28 kg/m³, and/or foam webs having large widths are used.

The gap distance between the rolls is adjusted to about 50% to 1% of the thickness of the original foam web, preferably about 20 to about 2% of the thickness of the starting foam web. The exact value depends on the expansion degree and the thickness of the starting foam web. With respect to the lower boundary the compressibility of the foam reaches and endpoint at which all cells are so close to each other that the foamed material is compacted to a plate or a film. The gap distance of subsequent pairs of rolls may differ from each other. It is for example possible that the gap clearance of a subsequent pair of rolls is smaller than the gap clearance of the previous pair of rolls.

A web tension is preferably applied to the foam web according to the process of the present invention while passing the at least two consecutive pairs of compression rolls in order to increase the cell rupturing effect. The web tension can preferably also be applied before the foam web enters the first pair of rolls.

Preferably the total circumferential speed of the second or subsequent pair of rolls is higher than that of the first or preceding pair of rolls.
The circumferential speeds of two consecutive pairs of rolls are preferably such that the ratio of the circumferential speeds of two consecutive pairs of rolls is defined as follows: v2>v1,v4>v3,v3>v1, wherein v1 and v2 are the circumferential speeds of the rolls in the first pair of said two pairs of rolls,
v3 and v4 are the circumferential speeds of the rolls in the second pair of said two pairs of rolls;
wherein the rolls with v1 and v4 are located on the same side of the foam web, and the rolls with v2 and v3 are located on the same side of the foam web; and
wherein said first pair of rolls is the pair of rolls which the foam web passes before said second pair of rolls.

With respect to the foam web passing the at least two pairs of rolls, adjacent rolls in a pair of rolls rotate in the same direction (machine direction) so that both rolls contribute to moving the foam web in the machine direction. In a preferred embodiment, v4>v2>v3>v1.

The degree of crushing or the friction ratio within each consecutive pairs of rolls can be varied by adjusting the circumferential speeds of the rolls. The term "consecutive" mentioned above refers to the pairs of rolls exerting a compression and shearing on the foamed web. This term does not exclude the possibility that further means or rolls, e.g. stabilizing rolls or rolls supporting the orientiation/alignement of the web, may be present according to demand. Such means or rolls can be adjusted by the skilled person when required. Thus, friction variations can also or additionally be controlled by an additional dancer system or similar means between two pairs of consecutive rolls.

It is a particular advantage of the present invention that comparably wide sheets or webs of foamed polyolefin polymers can be used for the process. Thus, it is possible to prepare crushed foamed webs or sheets having a width of at least 2,0 m or more. It is clear, however, that the process according to the present invention is also applicable for any widths lower than 2.0 m. Preferably the width of the foam web used for the process is at least 1 m, preferably at least 1,5 m, more preferably at least 2,0 m and most preferably about 2,0 m. A range of 1.0 to 2.0 m is also preferred. Particularly in the automotive industry such wide foam sheets having a high softness are more and more desired. Such articles have not been obtained in the prior art yet, but can be produced according to the present invention as a result of the particular combination of at least two pairs of rolls, and the combined compression and shearing applied to the starting foam web.

Another important advantage of the present invention is that starting foam webs having a high density can be used. For example it is preferred according to the present invention to use foam webs having densities of 20 kg/m³ to 500 kg/m³, preferably 24 kg/m³ to 350 kg/m³, more preferably 29 kg/m³ to 250 kg/m³.

All known polyolefin polymers from which closed-cell foams according to common processes can be produced can be used as a starting material for the process according to the present invention. Examples herefore are polyethylenes, like low density polyethylene (LDPE), linear low density polyethylene (LLDPE), very low density polyethylene (VLDPE), high density polyethylene (HDPE), polypropylenes like homo, random and block polypropylenes, as well as polypropylene copolymers, polyethylene/polypropylene-rubbers, olefin copolymers like ethylen vinyl acetate copolymers (EVA), ethylene methyl acrylate copolymers (EMA), ethylene butyl acrylate copolymers (EBA) and mixtures of these polymers. There is no restriction to the manner of preparing foam webs from these materials, and such methods are known to the skilled person. The starting foam for the process of the present invention may also contain additives for the purpose of weakening the foam, thus increasing the effectivity of the combined compression, and shearing process. Such additives are known to the skilled person.

The starting material is, however, not limited to the above mentioned polyolefines and generally comprises all conventional polyolefin foams comprising closed cells, i.e. having only closed cells, essentially only closed cells, or at least a large degree of closed cells. The present invention is therefore also suitable to increase the degree of open cells of polyolefin foams.

The foaming degree of the starting material, which is inversely related to the density can vary between wide ranges and can preferably be in the range of 2 to 50, more preferably 2 to 40, more preferably 5 to 30.

The effect of the process according to the present invention to rupture cell walls on the properties of the foamed material are more pronounced if the expansion degree (foaming degree) of the starting material is higher. However, as mentioned above it is an advantage of the present invention that also foams with a low expansion degree and corresponding high starting densities can be used to obtain foams with open cells.

The thickness of the foamed polyolefin web to be subjected to the compression and friction is not limited as long as the web or sheet can be passed through the gap between the at least two pairs of rolls. Usually, polyolefin foam materials are used having a thickness of 0,2 to 50 mm. The lower limitation of the thickness depends on the precision of the device (i.e. distance and parallelity of the compression rolls), whereas the upper boundary is defined by the fact that above this value there cannot be easily applied sufficient pressure and/or shearing in order to obtain a sufficient rupture of the cells of the foam.

Preferably the present invention relates to polyolefin foams prepared according to the process of the present invention having an inner ruptured cell structure, i.e. the cells along the whole axis of the thickness direction are essentially opened, and upper and lower surfaces which remain undamaged and water-resistant after the combined compression and shearing process. In such products the surfaces of the web form a continuous surface essentially or completely without openings.

The crushed open-cell foams according to the present invention have an extremely soft grip and a very low compression strength without being permeable for air or water due to the intact skin on top and bottom of the z-axis. They can advantageously be used as comfort material or cushioning material, automotive interiors having a comfortable and pleasant grip, or they are suitable as highly effective sealing materials in the field of automotives, machines or construction. Further, they are suitable in specific formulations for the application as medical cushioning materials, like e.g. wound care plasters or bandages.

It is also known from the prior art to produce open-cell foamed materials by perforation with needles or lasers. It is also possible according to the present invention to use needles or laser perforations if it is intended to use "breathing" (gas permeable) foamed material, i.e. a material which not only has an open-cell inner structure, but also perforated surfaces.

In a partiularly preferred embodiment the width of the foamed and processed web is at least 1m, preferably at least 1.5m, more preferably at least 2.0m, and most preferably about 2.0m or 1.0 to 2.0 m.

In a further preferred embodiment the present invention relates to a crushed polyolefin foam in the form of a web obtainable by using an expanded foam in the process having a density of 20 kg/m³ to 500 kg/m³, preferably 24 kg/m³ to 350 kg/m³, more preferably 29 kg/m³ to 250 kg/m³.

The process according to the present invention is explained in more detail by the following examples.

### EXAMPLE 1

A horizontally produced polyolefin foam (LLDPE based), i.e. a foam which has been crosslinked physically by means of electron irradiation, 99.9% of which consists of closed cells, having a foaming degree of 36 (28 kg/m³) and a thickness of 10 mm, was compressed and sheared between two pairs of rolls. The width of the foam was 0.2 m. The circumferential speed of the first roll in the first pair of rolls v1 was 5 m/min and the circumferential speed of the other roll in the first pair of rolls v2 was 6.75 m/min. The ratio of the circumferential speeds was therefore v1/v2 = 1:1,35. The circumferential speed of the first roll in the second pair of rolls v3 was 5.8 m/min and the circumferential speed of the other roll in the second pair of rolls v4 was 7.8 m/min. The ratio of the circumferential speeds was therefore v3/v4 = 1:1,35. The gap distance between each pair of rolls was 0.15 mm. The compressed and sheared foams obtained in this manner were subjected to a measurement of the compression strength according to the test standard ISO 844 depending on the compression (%).

The results are listed in Table 1.

Samples of the foam obtained in this manner were observed in a scanning electron microscope showing that the walls of cells in the foam were damaged to a large degree. The distribution of open cells was uniform along the thickness of the foam, except for the area of the surface (skin).

### EXAMPLE 2

The process of Example 1 was repeated using a vertically produced, physically crosslinked polyolefin foam (EVA based) having an expansion degree of 30 (density 31 kg/m³) and a thickness of 5.2 mm. Further parameters are given in Table 1. The other parameters were as in Example 1.

The results are listed in Table 1.

Samples of the foam obtained in this manner were observed in a scanning electron microscope showing that the walls of cells in the foam were damaged to a large degree. The distribution of open cells was uniform along the thickness of the foam, except for the area of the surface (skin).

### EXAMPLE 3

The process of Example 1 was repeated using a horizontally produced, crosslinked polyolefin foam (EVA based) having an expansion degree of 25 (density 40 kg/m³) and a thickness of 7.5 mm. Further parameters are given in Table 1. The other parameters were as in Example 1.

The results are listed in Table 1.

Samples of the foam obtained in this manner were observed in a scanning electron microscope showing that the walls of cells in the foam were damaged to a large degree. The distribution of open cells was uniform along the thickness of the foam, except for the area of the surface (skin).

### EXAMPLE 4

The process of Example 1 was repeated using a vertically produced, physically crosslinked polyolefin foam (LLDPE based) having an expansion degree of 21 (density 47 kg/m³) and a thickness of 3.3 mm. Further parameters are given in Table 1. The other parameters were as in Example 1.

The results are listed in Table 1.

Samples of the foam obtained in this manner were observed in a scanning electron microscope showing that the walls of cells in the foam were damaged to a large degree. The distribution of open cells was uniform along the thickness of the foam, except for the area of the surface (skin).

### EXAMPLE 5

The process of Example 1 was repeated using a vertically produced, physically crosslinked polyolefin foam (LDPE based) having an expansion degree of 8 (density 135 kg/m³) and a thickness of 3.0 mm. Further parameters are given in Table 1. The other parameters were as in Example 1.

The results are listed in Table 1.

Samples of the foam obtained in this manner were observed in a scanning electron microscope showing that the walls of cells in the foam were damaged to a large degree. The distribution of open cells was uniform along the thickness of the foam, except for the area of the surface (skin).

### Results:

It can be seen from the data in Table 1 that a considerable decrease of the compression strength was achieved in comparison with the starting product (designated as "standard" in the Table) even though the processed foam had a width of 0.2 m. The reduction of the compression strength provides the obtained product with a very soft grip and leather like appearance and feel.

It has to be noted that this effect can even be achieved with very low thicknesses of the starting foam web (Examples 2, 4, and 5, particularly Examples 4 and 5) and/or high densities of the starting foam web (Examples and 5, particularly 5). Preliminary data of the compression set (tested according to ISO 1856 C) indicate that very good results are also achieved in this respect; i.e. the compression set is low corresponding to a good recovery to the initial state prior to compression.

### COMPARISON EXAMPLE

As a comparison test, the same foamed webs as used in Examples 1 to 5 were treated according to the process described in DE 19840203 using a single pair of rolls.

The foams also had a width of 0.2 m whereas the width of the foam in DE 19840203 is not given.

Specifically, the first roll had a circumferential speed of 12.5 m/min and the second roll of 15 m/min. The gap width was 0.3-0.5 mm.

As a result, a foam having a large degree of ruptured cell walls and having a largely reduced compression and a low compression set could not be obtained. This result shows that the process of the present invention is advantageous in that also large widths and/or high densities can be handled and processed to obtain articles with a soft grip.

**Table 1**

| | | | Type | XL PO Foam horizontally processed | | XL PO Foam vertically processed | | XL PO Foam horizontally processed | | XL PO Foam vertically processed | | XL PO Foam vertically processed | |
|---|---|---|---|---|---|---|---|---|---|---|---|---|---|
| | | | Polymer | LDPE based | | EVA based | | EVA based | | LLDPE based | | LDPE based | |
| | | | Process | standard | squeezing | standard | squeezing | standard | squeezing | standard | squeezing | standard | squeezing |
| | | | Example | 1a | 1b | 2a | 2b | 3a | 3b | 4a | 4b | 5a | 5b |
| Property | | Unit | Test standard | | | | | | | | | | |
| Expansion | | factor | - | 40 | 41 | 30 | 27 | 25 | 23 | 21 | 25 | 7.4 | 8.3 |
| Densify | | kg/m³ | ISO 845 | 25 | 25 | 31 | 37 | 40 | 45 | 47 | 40 | 135 | 118 |
| Thickness | | mm | ISO 1923 | 10.2 | 10.8 | 5.2 | 5.3 | 7.5 | 7.1 | 3.3 | 3.6 | 3.0 | 3.0 |
| Comp. Strength | | kPa | ISO 845 | | | | | | | | | | |
| 10% | | | | 25 | 4 | 16 | 2 | 21 | 4 | 36 | 6 | 213 | 42 |
| 25% | | | | 46 | 6 | 39 | 11 | 44 | 9 | 58 | 11 | 262 | 89 |
| 50% | | | | 112 | 12 | 109 | 27 | 115 | 22 | 134 | 24 | 418 | 195 |
| | | | | | | | | | | | | | |

| | Process Parameters | | | | | | | | | | | | |
|---|---|---|---|---|---|---|---|---|---|---|---|---|---|
| | Gap | | mm | - | 0.15 | - | 0.15 | - | 0.15 | - | 0.15 | - | 0.18 |
| | Speed Roll 1 | | m/min | - | 5 | - | 5 | - | 5 | - | 5 | - | 5 |
| | Speed Roll 2 | | m/min | - | 6.75 | - | 6 | - | 6 | - | 6.5 | - | 6.5. |
| | Relation V1/V2 | | m/min | - | 1:1.35 | - | 1:1.2 | - | 1:1.2 | - | 1:1.2 | - | 1:1.3 |
| | Speed Roll 3 | | m/min | - | 5.8 | - | 5.4 | - | 5.4 | - | 5.7 | - | 5.7 |
| | Speed Roll 4 | | m/min | - | 7.8, | - | 6.5 | - | 6.5 | - | 7.4 | - | 7.4 |
| | Relation V3/V4 | | | - | 1:1.35 | - | 1:1.2 | - | 1:1.2 | - | 1:1.2 | - | 1:1.3. |
| | Friction | | | - | 35% | - | 20% | - | 20% | - | 30% | - | 30% |

| | | | | | | | | | | | | | |
|---|---|---|---|---|---|---|---|---|---|---|---|---|---|
| Remarks standard = crosslinked, closed-cell polyolefin foam, unprocessed squeezing = polyolefin foam processed according to the invention to open the cells | | | | | | | | | | | | | |

## Claims

1. A process for producing a crushed polyolefin foam comprising passing a web of a polyolefin foam through the gaps formed by each of at least two consecutive pairs of rolls, wherein the rolls of each pair of rolls are rotating in machine direction with a different circumferential speed with respect to the other roll of said pair of rolls so that the foam web is simultaneously subjected to compression and shearing, and
wherein the circumferential speeds of the rolls in at least two subsequent pairs of rolls are such that the rolls having a higher circumferential speed with respect to the other roll in each pair of rolls are located on different sides of the foam web.

2. A process according to claim 1, wherein the number of said pairs of rolls is two.

3. A process according to claim 1 or 2, wherein the ratio of the circumferential speeds of two consecutive pairs of rolls is defined as follows: v2>v1, v4>v3, v3>v1, wherein v1 and v2 are the circumferential speeds of the rolls in the first pair of said two pairs of rolls,
v3 and v4 are the circumferential speeds of the rolls in the second pair of said two pairs of rolls;
wherein the rolls with v1 and v4 are located on the same side of the foam web, and the rolls with v2 and v3 are located on the same side of the foam web; and
wherein said first pair of rolls is the pair of rolls which the foam web passes before said second pair of rolls.

4. A process according to claim 3, wherein the ratio of the circumferential speeds within a pair of rolls is within the following range: 1:1.02 to 1:5, preferably 1:1.05 to 1:2.5, more preferably 1:1.1 to 1:1.4.

5. A process according to any of claims 1 to 4, wherein the gap clearance between each pair of rolls is 0.05 - 50 mm, preferably 0.1 - 5 mm and the gap constancy during processing is 0.03 mm (+/- 0.01) and the roll straightness accuracy over the width during application of force is ≤ 0.01 mm.

6. A process according to any of claims 1 to 5, wherein the width of the foam web used for the process is at least 1m, preferably at least 1.5m, more preferably at least 2.0m, and most preferably about 2.0m or 1.0 to 2.0m.

7. A process according to any of claims 1 to 6, wherein the density of the foam web used for the process is 20 kg/m³ to 500 kg/m³, preferably 24 to 350 kg/m³, more preferably 29 to 250 kg/m³.

8. A process according to any of claims 1 to 7, wherein a pretension in the machine direction is applied to the foam web before said foam web enters the first pair of said pairs of rolls.

9. A crushed polyolefin foam in the form of a web, obtainable by a process according to any one of claims 1 to 8, **characterised by**, that
the cells in the inside of the web are essentially opened whereas the surfaces of the web form continuous surfaces essentially without openings.

10. A crushed polyolefin foam according to claim 9, having a width of at least 1m, preferably at least 1.5m, more preferably at least 2.0m, and most preferably about 2.0 m or 1.0 to 2.0m.

11. A crushed polyolefin foam according to claim 9 or 10, obtainable by using an expanded foam in the process having a density of 20 kg/m³ to 500 kg/m³, preferably 24 to 350 kg/m³, more preferably 29 to 250 kg/m³.

## Patentansprüche

1. Verfahren zur Herstellung eines gequetschten Polyolefinschaums, umfassend Führen einer Polyolefinschaumbahn durch Spalte, welche durch jedes mindestens zweier aufeinander folgender Walzenpaare gebildet werden,
worin die Walzen jedes Walzenpaars in Maschinenrichtung mit einer unterschiedlichen Umfangsgeschwindigkeit bezüglich der anderen Walze des Walzenpaars derart rotieren, dass die Schaumbahn gleichzeitig einer Kompression und Scherung unterzogen wird, und
worin die Umfangsgeschwindigkeiten der Walzen in mindestens zwei aufeinander folgenden Walzenpaaren derart sind, dass die Walzen mit einer höheren Umfangsgeschwindigkeit in Bezug auf die andere Walze in jedem Walzenpaar auf verschiedenen Seiten der Schaumbahn positioniert sind.

2. Verfahren nach Anspruch 1, worin die Anzahl der Walzenpaare zwei ist.

3. Verfahren nach Anspruch 1 oder 2, worin das Verhältnis der Umfangsgeschwindigkeiten der zwei aufeinander folgenden Walzenpaare wie folgt definiert ist:
v2>v1, v4>v3, v3>v1,
worin v1 und v2 die Anfangsgeschwindigkeiten der Walzen in dem ersten Paar der zwei Walzenpaare sind,
v3 und v4 die Umfangsgeschwindigkeiten der Walzen in dem zweiten Paar der zwei Walzenpaare sind;
worin die Walzen mit v1 und v4 auf der gleichen Seite der Schaumbahn angeordnet sind und die Walzen mit v2 und v3 auf der gleichen Seite der Schaumbahn angeordnet sind; und
worin das erste Walzenpaar das Walzenpaar ist, welches die Schaumbahn vor dem zweiten Walzenpaar durchläuftt.

4. Verfahren nach Anspruch 3, worin das Verhältnis der Umfangsgeschwindigkeiten innerhalb eines Walzenpaars innerhalb des folgenden Bereichs ist: 1:1,02 bis 1:5, bevorzugt 1:1,05 bis 1:2,5, bevorzugter 1:1,1 bis 1:1,4.

5. Verfahren nach einem der Ansprüche 1 bis 4, worin der Spaltabstand zwischen jedem Paar von Walzen 0,05 - 50 mm beträgt, bevorzugt 0,1 - 5 mm, und die Spaltkonstanz während der Verarbeitung 0,03 mm (+/- 0,01) ist, und die Walzengeradheitsgenauigkeit über die Breite während der Krafteinwirkung ≤ 0,01 mm ist.

6. Verfahren nach einem der Ansprüche 1 bis 5, worin die für das Verfahren verwendete Schaumbahnbreite mindestens 1 m, bevorzugt mindestens 1,5 m, bevorzugter mindestens 2,0 m und am bevorzugtesten etwa 2,0 m oder 1,0 bis 2,0 m ist.

7. Verfahren nach einem der Ansprüche 1 bis 6, worin die für das Verfahren verwendete Schaumbahndichte 20 kg/m³ bis 500 kg/m³ ist, bevorzugter 24 bis 350 kg/m³, noch bevorzugter 29 bis 250 kg/m³.

8. Verfahren nach einem der Ansprüche 1 bis 7, worin auf die Schaumbahn in Maschinenrichtung eine Vorspannung ausgeübt ist, bevor die Schaumbahn in das erste Paar der Walzenpaare eintritt.

9. Gequetschter Polyolefinschaum in Form einer Bahn, erhältlich durch ein Verfahren nach einem der Ansprüche 1 bis 8, **dadurch gekennzeichnet, dass** die Zellen im Inneren der Bahn im Wesentlichen geöffnet sind, während die Oberflächen der Bahn kontinuierliche Oberflächen im Wesentlichen ohne Öffnungen bilden.

10. Gequetschter Polyolefinschaum nach Anspruch 9 mit einer Breite von mindestens 1 m, bevorzugt mindestens 1,5 m, bevorzugter mindestens 2,0 m und am bevorzugtesten etwa 2,0 m oder 1,0 bis 2,0 m.

11. Gequetschter Polyolefinschaum nach Anspruch 9 oder 10, erhältlich, indem in dem Verfahren ein expandierter Schaum mit einer Dichte von 20 kg/m³ bis 500 kg/m³, bevorzugt 24 bis 350 kg/m³, bevorzugter 29 bis 250 kg/m³, verwendet wird.

## Revendications

1. Procédé de production d'une mousse de polyoléfine broyée consistant à passer une feuille continue d'une mousse de polyoléfine à travers les vides formés par chacune d'au moins deux paires consécutives de rouleaux, dans lequel les rouleaux de chaque paire de rouleaux tournent dans le sens machine avec une vitesse de circonférence différente par rapport à l'autre rouleau de ladite paire de rouleaux, si bien que la feuille continue de mousse est soumise simultanément à une compression et à un cisaillement, et
dans lequel les vitesses de circonférence des rouleaux dans au moins deux paires consécutives de rouleaux sont telles que les rouleaux ayant une vitesse de circonférence supérieure par rapport à l'autre rouleau dans chaque paire de rouleaux sont situés sur des faces différentes de la feuille continue de mousse.

2. Procédé selon la revendication 1, dans lequel lesdites paires de rouleaux sont au nombre de 2.

3. Procédé selon la revendication 1 ou 2, dans lequel le rapport des vitesses de circonférence de deux paires consécutives de rouleaux se définit comme suit : v2>v1, v4>v3, v3>v1, où v1 et v2 sont les vitesses de circonférence des rouleaux dans la première paire desdites deux paires de rouleaux,
v3 et v4 sont les vitesses de circonférence des rouleaux dans la seconde paire desdites deux paires de rouleaux ;
dans lequel les rouleaux ayant v1 et v4 sont situés sur la même face de la feuille continue de mousse, et les rouleaux ayant v2 et v3 sont situés sur la même face de la feuille continue de mousse ; et
dans lequel ladite première paire de rouleaux est la paire de rouleaux que la feuille continue de mousse passe avant ladite seconde paire de rouleaux.

4. Procédé selon la revendication 3, dans lequel le rapport des vitesses de circonférence dans une paire de rouleaux se situe dans la plage suivante : 1:1,02 à 1:5, de préférence 1:1,05 à 1:2,5, et de façon plus préférée 1:1,1 à 1:1,4.

5. Procédé selon l'une quelconque des revendications 1 à 4, dans lequel l'espace libre entre chaque paire de rouleaux est de 0,05 à 50 mm, de préférence de 0,1 à 5 mm, et la constance d'espacement durant le traitement est de 0,03 mm (± 0,01) et la précision de rectitude des rouleaux sur toute la largeur durant l'application de la force est ≤ 0,01 mm.

6. Procédé selon l'une quelconque des revendications 1 à 5, dans lequel la largeur de la feuille continue de mousse utilisée pour le traitement est d'au moins 1 m, de préférence d'au moins 1,5 m, de façon plus préférée d'au moins 2,0 m, et de façon particulièrement préférée d'environ 2,0 m ou de 1,0 à 2,0 m.

7. Procédé selon l'une quelconque des revendications 1 à 6, dans lequel la densité de la feuille continue de mousse utilisée pour le traitement est de 20 kg/m³ à 500 kg/m³, de préférence de 24 à 350 kg/m³, et de façon plus préférée de 29 à 250 kg/m³_{.}

8. Procédé selon l'une quelconque des revendications 1 à 7, dans lequel on applique une prétension dans le sens machine sur la feuille continue de mousse avant que ladite feuille continue de mousse entre dans la première paire desdites paires de rouleaux.

9. Mousse de polyoléfine broyée sous forme de feuille continue, pouvant être obtenue par un procédé selon l'une quelconque des revendications 1 à 8, **caractérisée en ce que** les cellules à l'intérieur de la feuille continue sont essentiellement ouvertes, tandis que les surfaces de la feuille continue forment des surfaces continues essentiellement exemptes d'ouvertures.

10. Mousse de polyoléfine broyée selon la revendication 9, ayant une largeur d'au moins 1 m, de préférence d'au moins 1,5 m, de façon plus préférée d'au moins 2,0 m, et de façon particulièrement préférée d'environ 2,0 m ou de 1,0 à 2,0 m.

11. Mousse de polyoléfine broyée selon la revendication 9 ou 10, pouvant être obtenue en utilisant dans le processus une mousse expansée ayant une densité de 20 kg/m³, de préférence de 24 à 350 kg/m³, et de façon plus préférée de 29 à 250 kg/m³_{.}
